# EUROPEAN PATENT APPLICATION

(11) **EP 0 557 931 A1**
(43) Date of publication of application: **01.09.1993**
(21) Application number: 93102771.8
(22) Date of filing: 22.02.1993
(51) Int. Cl.: G01P 3/44

(54) **Device for measuring rotational speed**

(30) Priority: 28.02.1992 IT TO920170
(71) Applicant: SKF INDUSTRIE S.P.A., I-10123 Torino (IT)
(72) Inventor: Vignotto, Angelo, I-10134 Torino (IT); Forestiero Paolo, I-10060 Airasca (TO) (IT)
(74) Representative: Lotti, Giorgio

(57) **Abstract**

The invention relates to a device for measuring the relative rotational speed of two relatively rotating members, such as the members supporting a vehicle wheel, of the type comprising a sensor or coil (11) connected to the electronic control unit on board and magnetically coupled to a rotating part or phonic wheel (14). The coil (11) is positioned against a magnetized ring (10) and fixed together with it onto the fixed part of the vehicle; the phonic wheel (14) consists of a toothed or apertured metal ring arranged on the rotating element which is to be monitored, such that its toothed or apertured part (15) faces the poles of the magnetized ring (10).

## Description

This invention falls within the field of devices for measuring the relative rotational speed of two relatively rotating members, such as members supporting a vehicle wheel. In particular, the invention relates to a device of the aforesaid type comprising a phonic wheel consisting of a simple toothed metal ring. Special control circuits of the following types are being increasingly installed on vehicles:
- ABS type, the purpose of which is to prevent vehicle wheel locking during braking;
- ASR type, the purpose of which is to control correct vehicle traction;
- speed measurement devices such as tachometers;
- distance measurement devices such as odometers.

These measurement systems are generally provided with basic components such as a phonic wheel, measurement sensor, on-board computer, cabling and a hydraulic unit.

The phonic wheel is commonly a toothed or magnetized ring which is mounted on the rotating part to be monitored, whereas the sensor, of active or passive type, is installed on the fixed part of the frame and faces the toothed or magnetized region of the phonic wheel at a predetermined distance away.

The electrical signals provided by the sensor are fed to the on-board computer which in the ABS system determines the speed differences between the wheels.

Currently used passive sensors are based on reluctance variation and do not require powering. In contrast, modern active sensors are normally of inductive type comprising a small coil powered by an oscillator circuit, or elements sensitive to magnetic field variation (Hall cells, magnetoresistors, etc.).

Both said types of sensor are particularly sensitive to the damaging effect of the metal particles deriving from brake wear which reach the proximity of the sensors, and of the high temperature developed by the brake discs. In addition they are protected as much as possible against impact, contaminants such as dust and dirt, and other dangers of damage.

An object of the present invention is to provide a simpler measuring device with a phonic wheel which is lighter than traditional wheels and therefore develops a lower centrifugal force under normal operating conditions.

A rotational speed measuring device is known in which the fixed part, comprising the sensor and connected to the vehicle electronic control unit, is fixed inside a toothed metal ring of C cross-section, known as the flux concentrator. Into this there is partially inserted a magnetized ring, generally of rubber, which is arranged on the rotating part by way of a metal support. The alternating poles of the magnetic ring rotate relative to the teeth of the flux concentrator to create a magnetic flux alternating with a frequency proportional to the rotational speed of the rotating element. This flux is linked with the sensor coil. These devices have the drawback that because of the high temperature which develops, with prolonged use the magnetized ring tends to separate from its magnetic support. In addition the magnetized rings for this type of device require a magnetization which is rather complicated to achieve.

A further object of the invention is to provide a rotational speed measuring device which is free of the aforesaid drawbacks and in addition enables an easily magnetized ring to be used, with the result that the magnetization operations are simplified and consequently a less complex magnetizer is required.

These and further objects and advantages, which will be more apparent hereinafter, are attained according to the invention by a device for measuring the relative rotational speed of two relatively rotating members, such as the members supporting a vehicle wheel, of the type comprising a sensor or coil connected to the electronic control unit on board and magnetically coupled to a rotating part or phonic wheel, characterised in that the coil and a magnetized ring are positioned against each other and fixed onto the fixed part of the vehicle; the phonic wheel consisting of a toothed or apertured metal ring arranged on the rotating element which is to be monitored, such that its toothed or apertured part faces the poles of the magnetized ring.

The structural and operational characteristics of a preferred but non-limiting embodiment of the device according to the invention are described hereinafter with reference to the accompanying drawings, in which:
Figure 1 is a schematic axial section through the device of the invention;
Figure 2 shows, to a larger scale, the device of Figure 1 mounted on the bearing of a motor vehicle wheel.

With reference to the figures, the measuring device comprises a magnetized ring 10 positioned against a measuring coil 11, these being contained in a metal ring 13 of L cross-section, known as a flux concentrator. This element is fixed to a fixed part (not shown for simplicity) of the vehicle.

According to the invention, the rotating part of the device is a toothed metal wheel 14, comprising a toothed or apertured part 15 facing the magnetized ring 10, and a continuous part 16 which in the present example is cylindrical for simplicity. The toothed wheel 14 is mounted by keying it directly onto the rotating element to be monitored, this in the present example (Figure 2) being the inner race 20 of a vehicle wheel bearing.

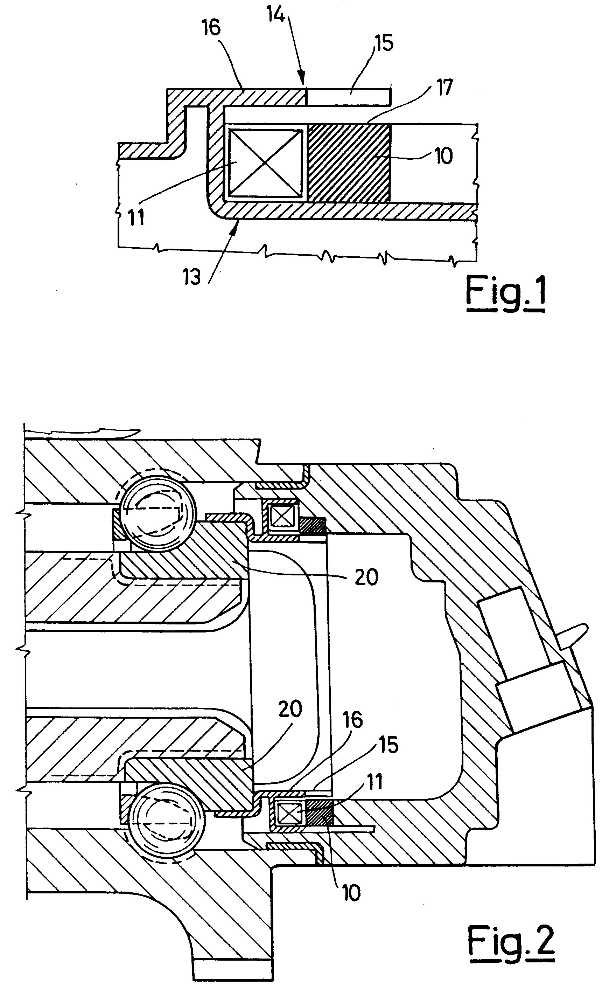

The ring 10 (Figure 1) is advantageously magnetized with alternate poles on its inner surface 17 facing the teeth 15 of the wheel 14. The operation of the device is as follows. The wheel 14 rotates such that at a certain moment all its teeth 15 face the north poles of the magnetized ring 10, whereas at the next moment all its teeth 15 face the south poles. At each step there is therefore a variation in the magnetic flux linkage of the coil 11, which transmits to the on-board electronic control unit, via suitable cabling (not shown for simplicity of the drawing), an electric current induced by the {variation in the magnetic flux generated by the poles of the ring 10 and continuously "cut" by the teeth 15.

As will be apparent, a measuring device according to the present invention offers various advantages. Firstly the toothed wheel 14 can be formed of minimum thickness, with very low inertia and lesser centrifugal force than in the past. For example the toothed flange of traditional C-section concentrators can be cut and used as the phonic wheel.

In addition, the fixed part of the device, comprising the concentrator 13, the magnetized ring 10 and the coil 11 forms a compact assembly able to better withstand impacts and stresses.

The spaces are optimized, so that for equal overall size a larger magnet can be used.

Moreover, it requires less accuracy in mounting because compared with the device described in the introduction to the present description one gap has been eliminated and there is therefore one tolerance less to be respected.

It will also be noted that the device according to the invention is particularly suitable for forming the ring 10 plus coil 11 as a preassembled unit using a plastics mould, allowing the wheel 14 to then be mounted by a simpler operation. In addition, because of the particular configuration the parts involving the magnetic flux are more protected against high temperature and against particles undergoing magnetic attraction. Finally, as stated in the introduction, the device operates with a ring with single instead of double magnetization, with all the consequent advantages. Although only one preferred embodiment has been described, the invention is not limited thereto and numerous modifications obvious to an expert of the art can be made thereto without leaving the scope of the invention, as defined by the following claims.

## Claims

1. A device for measuring the relative rotational speed of two relatively rotating members, such as the members supporting a vehicle wheel, of the type comprising a sensor or coil (11) connected to the electronic control unit on board and magnetically coupled to a rotating part or phonic wheel (14), characterised in that the coil (11) and a magnetized ring (10) are positioned against each other and fixed onto the fixed part of the vehicle; the phonic wheel (14) consisting of a toothed or apertured metal ring arranged on the rotating element which is to be monitored, such that its toothed or apertured part (15) faces the poles of the magnetized ring (10).

2. A device as claimed in claim 1, characterised in that the magnetized ring (10) and the coil (11) are arranged within a metal ring or flux concentrator (13) of L cross-section.

3. A device as claimed in claim 1, characterised in that the ring (10) is magnetized on its inner surface (17) facing the teeth (15) of the phonic wheel (14).
